# EUROPEAN PATENT APPLICATION

(11) **EP 4 439 736 A1**
(43) Date of publication of application: **02.10.2024**
(21) Application number: 24166497.8
(22) Date of filing: 26.03.2024
(51) Int. Cl.: H01M 4/62, H01M 10/42, H01M 4/131, H01M 10/0525, H01M 4/02

(54) **SECONDARY BATTERY AND ELECTRONIC APPARATUS**

(30) Priority: 31.03.2023 CN 202310332181
(71) Applicant: Ningde Amperex Technology Ltd., Ningde City, Fujian 352100 (CN)
(72) Inventor: CHEN, Meifeng, Ningde City, Fujian Province, People s Republic of China, 352100 (CN)
(74) Representative: Icosa

(57) **Abstract**

A secondary battery includes a positive electrode plate, where the positive electrode plate has a resistance of R Ω, R ranges from 0.5 to 2. The positive electrode plate includes a positive electrode current collector and a positive electrode active material layer, where the positive electrode active material layer is arranged on at least one surfase of the positive electrode current collector. The positive electrode active material layer includes positive electrode active material particles and chelated particles, where the chelated particles include an organic compound containing a cyano group. Within at least one region of 5 µm × 5 µm of the positive electrode active material layer, a ratio of a quantity of the chelated particles to a quantity of the positive electrode active material particles ranges from 0.01 to 0.5. The secondary battery provided in this application can have good thermal safety performance and rate performance.

## Description

### FIELD

This application relates to the field of battery technologies, and in particular, to a secondary battery and an electronic apparatus.

### BACKGROUND

Batteries have become an indispensable part of mobile devices. For example, in a mobile device such as a mobile phone, a notebook computer, a tablet computer, and an electric vehicle, a battery can usually be used as a power source. As a power source, a battery with good thermal safety performance and rate performance can help to improve user experience of the foregoing device. Therefore, it is urgent to solve the technical problem of ensuring good thermal safety performance and rate performance of batteries.

### SUMMARY

This application provides a secondary battery and an electronic apparatus, with good thermal safety performance and rate performance provided.

According to a first aspect, this application provides a secondary battery, including a positive electrode plate, where the positive electrode plate has a resistance of R Q, R being 0.5 to 2. The positive electrode plate includes a positive electrode current collector and a positive electrode active material layer, where the positive electrode active material layer is arranged on at least one surface of the positive electrode current collector. The positive electrode active material layer includes positive electrode active material particles and chelated particles, where the chelated particles include an organic compound containing a cyano group. Within at least one region of 5 µm × 5 µm of the positive electrode active material layer, a ratio of a quantity of the chelated particles to a quantity of the positive electrode active material particles ranges from 0.01 to 0.5.

In the secondary battery provided in this application, the positive electrode plate has a resistance of R Q, R being 0.5 to 2, and the chelated particles in the positive electrode active material layer include an organic compound containing a cyano group. The organic compound containing the cyano group can be combined with exposed active sites in the positive electrode active material particles. In this way, structural stability of the positive electrode active material particles can be improved, which helps to improve the rate performance of the secondary battery. In addition, the probability of contact between these exposed active sites and an electrolyte can be reduced, which reduces heat generated by oxidation and decomposition of the electrolyte so as to reduce the occurrence of 3 of the secondary battery, thereby improving the thermal safety performance of the secondary battery. Moreover, when the ratio, within at least one region of 5 µm × 5 µm of the positive electrode active material layer, of the quantity of the chelated particles to the quantity of the positive electrode active material particles is within the foregoing range, the secondary battery has relatively good rate performance. Therefore, the secondary battery provided in this application can have good thermal safety performance and rate performance.

According to any one of the forgoing embodiments in the first aspect of this application, when the ratio, within at least one region of 5 µm × 5 µm of the positive electrode active material layer, of the quantity of the chelated particles to the quantity of the positive electrode active material particles ranges from 0.1 to 0.3 and R ranges from 0.8 to 1.5, the positive electrode plate has a resistance ranging from 0.8 Q to 1.5 Q. When the resistance of the electrode plate and the ratio of the quantity of the chelated particles to the quantity of the positive electrode active material particles are within the foregoing ranges, good thermal safety performance and rate performance of the secondary battery can be further guaranteed.

According to any one of the forgoing embodiments in the first aspect of this application, where Dᵥ50 is ≤ 4, Dᵥ50 µm is a particle diameter reaching a volume accumulation of 50% from the small particle diameter side in the volume-based particle size distribution of the chelated particles. When the volume-based particle size Dᵥ50 µm of the chelated particles is within the foregoing range, more chelated particles can be distributed on a surface of the positive electrode active material particles, and the probability of combination between the chelated particles and exposed active sites in the positive electrode active material particles is increased.

According to any one of the forgoing embodiments in the first aspect of this application, a mass percentage of the chelated particles in the positive electrode active material layer is A%, and the positive electrode active material layer has a thickness of H µm, where A and H satisfy: A × H ≥ 10. When A and H satisfy the foregoing relationship, good thermal safety performance and high energy density of the secondary battery can be further guaranteed.

According to any one of the forgoing embodiments in the first aspect of this application, the mass percentage A% of the chelated particles in the positive electrode active material layer ranges from 0.05% to 0.5%.

According to any one of the forgoing embodiments in the first aspect of this application, the volume-based particle size of the chelated particles is Dᵥ50 µm, and the resistance of the positive electrode plate is R Q, where Dᵥ50 and R satisfy: Dᵥ50/R ≤ 2.5. When R of the positive electrode and Dᵥ50 satisfy the foregoing relationship, the thermal safety performance of the secondary battery can be further improved.

According to any one of the forgoing embodiments in the first aspect of this application, the thickness of the positive electrode active material layer is H µm, where H is 50 to 200. When H is set within the foregoing range, the energy density of the secondary battery can be increased while improving the thermal safety performance of the secondary battery.

According to any one of the forgoing embodiments in the first aspect of this application, the chelated particles include one or more selected from a group consisting of polyacrylonitrile and modified polyacrylonitrile, tetra (cyanoethoxymethyl) methane, tetra (4-nitrophenyl) ethylene, and 2-cyano-5-methylpyridine. The organic compound included in the chelated particles can coordinate and be chelated with the exposed active sites on the surface of the positive electrode active material particles, so that stability of a surface structure of a positive electrode active material can be improved, which reduces the probability of contact between these exposed active sites and the electrolyte, thereby accordingly reducing heat generated by oxidation and decomposition of the electrolyte so as to reduce the occurrence of thermal runaway of the secondary battery and improve the thermal safety performance of the secondary battery.

According to any one of the forgoing embodiments in the first aspect of this application, the chelated particles further include polyacrylic acid and modified polyacrylic acid.

According to any one of the forgoing embodiments in the first aspect of this application, R ranges from 0.8 to 1.2.

According to any one of the forgoing embodiments in the first aspect of this application, 10≤A × H ≤ 32.5, and H ranges from 80 to 200.

According to any one of the forgoing embodiments in the first aspect of this application, 1.0≤ Dᵥ50/R ≤ 2.1.

According to a second aspect, this application provides an electronic apparatus, including the secondary battery according to the first aspect of this application.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

FIG. 1 is an SEM image of a surface of a positive electrode active material layer in a positive electrode plate according to Example 1 of this application.
FIG. 2 is an SEM image of a surface of a positive electrode active material layer in a positive electrode plate according to Example 5 of this application.

### DESCRIPTION OF EMBODIMENTS

The following embodiments are merely intended for a clearer description of the technical solutions of this application and therefore are used as just examples which do not constitute any limitation on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification and claims of this application are intended to cover non-exclusive inclusions.

In the description of some embodiments in this application, "a plurality of" means at least two unless otherwise specifically stated.

In this specification, reference to "embodiment" means that specific features, structures, or characteristics described with reference to some embodiments may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that some embodiments described herein may be combined with other embodiments.

In the description of some embodiments of this application, unless otherwise stated, "more than" and "less than" are inclusive of the present number, and "more types" in "one or more types" and "more" in "one or more" means more than two.

The grouping of alternative elements or implementations disclosed herein should not be construed as any limitation. Each group member can be adopted and claimed separately or in any combination with another member of the group or another element in this specification. It can be foreseen that one or more members of a group may be included in or deleted from the group for convenience and/or patentability. When any such inclusion or deletion occurs, the specification is deemed herein to include a changed group, thus satisfying the written description of all Markush groups used in the claims.

It is obvious to persons skilled in the art that various modifications and variations can be made in this application without departing from the protection scope of this application. Therefore, this application is intended to cover the modifications and variations of this application which fall within the corresponding claims (protection scope) and their equivalents. It should be noted that the implementations provided in some embodiments of this application can be combined in the absence of conflicts.

Before expounding the protection scope claimed through some embodiments of this application, this application first specifically explains the problems existing in the related art for easy understanding of some embodiments of this application.

In a high-temperature environment, a CEI film on a surface of a positive electrode plate of a secondary battery may decompose and undergo irreversible phase transition, which leads to deterioration of rate performance of the secondary battery. In addition, such change on the surface of the positive electrode plate may expose some active sites (metal ions, and the like) on the surface of the positive electrode plate and release oxygen and heat. Once these active sites and the oxygen come into contact with an electrolyte, the electrolyte may be oxidized and decomposed, generating heat and gas. When such heat accumulates to a certain extent, thermal runaway of the secondary battery may occur, leading to thermal safety performance deterioration.

In view of this, some embodiments of this application provide a secondary battery and an electronic apparatus, which can guarantee good thermal safety performance and rate performance.

In this application, the secondary battery may include a lithium secondary battery. For example, the lithium secondary battery may include, but is not limited to, a lithium metal secondary battery, a lithium-ion secondary battery, a lithium polymer secondary battery, or a lithium-ion polymer secondary battery.

### Secondary battery

According to a first aspect, this application provides a secondary battery, including a positive electrode plate, where the positive electrode plate has a resistance of R Q, R being 0.5 to 2. The positive electrode plate includes a positive electrode current collector and a positive electrode active material layer, where the positive electrode active material layer is arranged on at least one surface of the positive electrode current collector. The positive electrode active material layer includes positive electrode active material particles and chelated particles, where the chelated particles include an organic compound containing a cyano group. Within at least one region of 5 µm × 5 µm of the positive electrode active material layer, a ratio of a quantity of the chelated particles to a quantity of the positive electrode active material particles ranges from 0.01 to 0.5.

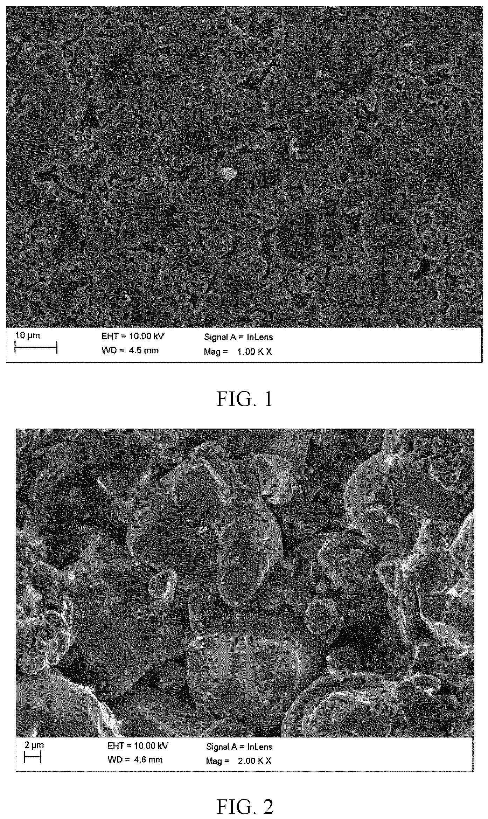

In this application, the chelated particles and active material particles can be observed using an SEM electron microscopy. Because the chelated particles are nonconductive, they are pan-white under the SEM electron microscope, which is obviously different from the color (black) of the active material particles. As shown in FIG. 1, in an SEM image of a surface of a positive electrode active material layer under 1000 times field of view, a 5 µm × 5 µm region may be taken, from which quantities of white particles and black particles are collected to obtain a range of a ratio of a quantity of chelated particles to a quantity of positive electrode active material particles.

It can be understood that under the SEM electron microscope, with one or more regions having length and width of 5 µm × 5 µm randomly selected, after observation on the region, quantities of chelated particles and positive electrode active material particles are collected and compared to obtain the foregoing ratio range.

In the secondary battery provided in this application, the resistance of the positive electrode plate is R Q, R being 0.5 to 2, and the chelated particles in the positive electrode active material layer include the organic compound containing the cyano group, where the organic compound containing the cyano group can be combined with exposed active sites in the positive electrode active material particles. In this way, structural stability of the positive electrode active material particles can be improved, which helps to improve rate performance of the secondary battery. In addition, the probability of contact between these exposed active sites and an electrolyte can be reduced, which reduces heat generated by oxidation and decomposition of the electrolyte so as to reduce the occurrence of thermal runaway of the secondary battery, thereby improving thermal safety performance of the secondary battery. Moreover, when the ratio, within at least one region of 5 µm × 5 µm of the positive electrode active material layer, of the quantity of the chelated particles to the quantity of the positive electrode active material particles is within the foregoing range, the secondary battery has relatively good rate performance. Therefore, the secondary battery provided in this application can have good thermal safety performance and rate performance.

In some embodiments of this application, within at least one region of 5 µm × 5 µm of the positive electrode active material layer, the ratio of the quantity of the chelated particles to the quantity of the positive electrode active material particles ranges from 0.1 to 0.3. When the ratio of the quantity of the chelated particles to the quantity of the positive electrode active material particles is within the foregoing range, good thermal safety performance and rate performance of the secondary battery can be further guaranteed.

In some embodiments of this application, a size of the chelated particles is within a proper range, which can help to improve the thermal safety performance of the secondary battery.

Referring to FIG. 2, in some embodiments of this application, where Dᵥ50 is ≤ 4, Dᵥ50 µm is a particle diameter reaching a volume accumulation of 50% from the small particle diameter side in the volume-based particle size distribution of the chelated particles. When Dᵥ50 is within the foregoing range, more chelated particles can be distributed on a surface of the positive electrode active material particles, and the probability of combination between the chelated particles and exposed active sites in the positive electrode active material particles is increased.

In this application, Dᵥ50 µm refers to a corresponding particle size at the 50th percentile of the cumulative volume distribution of the chelated particles, which can be tested using a method or an instrument well known in the art. For example, with reference to GB/T 19077-2016 particle size distribution laser diffraction method, a laser particle size analyzer (for example, Master Size 3000) may be used for testing.

In addition, the secondary battery further includes a negative electrode plate and a separator, where the separator is arranged between the positive electrode plate and the negative electrode plate to separate the positive and negative electrode plates. When resistance of a secondary battery decreases under an abnormal condition, temperature of the secondary battery may rise. After the temperature reaches a certain value, a separator shrinks, and then positive and negative electrode plates come into contact, which causes a short circuit, leading to thermal runaway. Therefore, in some embodiments of this application, the volume-based particle size of the chelated particles is Dᵥ50 µm, and the resistance of the positive electrode plate is R Q, where Dᵥ50 and R satisfy: Dᵥ50/R ≤ 2.5. When the resistance of the positive electrode plate decreases to a certain extent which leads to a problem of safety performance of the secondary battery, because R of the positive electrode and Dᵥ50 satisfy the foregoing relationship, the secondary battery can have relatively good rate performance while improving the thermal safety performance of the secondary battery. In some embodiments of this application, R ranges from 0.8 to 1.5. When the resistance R of the positive electrode plate is within the foregoing range, the thermal safety performance of the secondary battery can be further improved.

In the secondary battery provided in this application, thickness of the positive electrode active material layer has certain influence on the thermal safety performance. When the positive electrode active material layer is relatively thin, positive electrode active material particles inside it are prone to expose active sites, which leads to easy contact with an electrolyte. Heat released by oxidation and decomposition of the electrolyte increases the probability of thermal runaway of the secondary battery. Therefore, in some embodiments of this application, a mass percentage of the chelated particles in the positive electrode active material layer is A%, and the positive electrode active material layer has a thickness of H µm, where A and H satisfy: A × H ≥ 10. When A and H satisfy the foregoing relationship, good thermal safety performance and rate performance of the secondary battery can be further guaranteed.

In some embodiments of this application, the mass percentage of chelated particles in the positive electrode active material layer ranges from 0.05% to 0.5%. When the mass percentage A% of the chelated particles in the positive electrode active material layer is within the foregoing range, the secondary battery can have relatively good rate performance while improving the thermal safety performance of the secondary battery.

In some embodiments of this application, the positive electrode active material layer has a thickness of 50 µm to 200 µm. When the thickness of the positive electrode active material layer is set within the foregoing range, energy density of the secondary battery can be improved while improving the thermal safety performance of the secondary battery.

In this application, the thickness of the positive electrode active material layer refers to the thickness of both sides, that is, H is equal to thickness of the positive electrode plate minus thickness of a current collector, which can be tested using a method or an instrument well known in the art.

In some embodiments of this application, proper chelated particles can further help to improve the thermal safety performance of the secondary battery. In some embodiments of this application, the chelated particles include one or more selected from a group consisting of polyacrylonitrile and modified polyacrylonitrile, tetra (cyanoethoxymethyl) methane, tetra (4-nitrophenyl) ethylene, and 2-cyano-5-methylpyridine. The organic compound included in the chelated particles can coordinate and be chelated with the exposed active sites on the surface of the positive electrode active material particles, so that stability of a surface structure of a positive electrode active material can be improved, which reduces the probability of contact between these exposed active sites and the electrolyte, thereby accordingly reducing heat generated by oxidation and decomposition of the electrolyte so as to reduce the occurrence of thermal runaway of the secondary battery and improve the thermal safety performance of the secondary battery.

In some other embodiments of this application, the chelated particles further include polyacrylic acid and modified polyacrylic acid.

In some other embodiments of this application, R ranges from 0.8 to 1.2.

In some other embodiments of this application, 10≤A × H ≤ 32.5, and H ranges from 80 to 200.

In some other embodiments of this application, 1.0≤ Dᵥ50/R ≤ 2.1.

In some embodiments of this application, the positive electrode active material layer further includes a binder, where the binder enhances bonding between the positive electrode active material particles and enhances bonding between the positive electrode active material particles and positive electrode current collector.

For example, the binder may include one or more selected from a group consisting of polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, and nylon.

In some embodiments of this application, the positive electrode active material layer further includes a conductive agent, where the conductive agent includes one or more selected from a group consisting of a carbon-based material, a metal-based material, a conductive polymer, and a mixture thereof.

For example, the carbon-based material includes one or more selected from a group consisting of carbon black, acetylene black, Ketjen black, carbon nanofibers, and carbon nanotubes. The metal-based material includes one or more selected from a group consisting of metal powder, metal fibers, copper, nickel, aluminum, and silver. The conductive polymer includes a polyphenylene derivative.

The positive electrode plate in this application can be manufactured using a conventional method in the art. For example, the positive electrode active material particles, organic particles, the conductive agent, and the binder are dispersed and mixed in N-methylpyrrolidone (NMP) to obtain a uniform positive electrode slurry, the positive electrode slurry is applied onto the positive electrode current collector, and then drying, cold pressing, cutting, slitting, and re-drying are performed to obtain the positive electrode plate.

A secondary battery known in the art usually further includes a negative electrode plate and a separator. The negative electrode plate includes a negative electrode current collector and a negative electrode active material layer arranged on at least one surface of the negative electrode current collector, and the separator is arranged between the negative electrode plate and a positive electrode plate.

It can be understood that a negative electrode plate can be provided with a negative electrode active material layer on one surface of a negative electrode current collector, and can alternatively be provided with the negative electrode active material layer on two surfaces of the negative electrode current collector. This is not particularly limited in some embodiments of this application.

In some embodiments of this application, the negative electrode current collector may be a metal foil or a porous metal plate, for example, copper, nickel, titanium, iron, another metal, and an alloy foil or porous plate thereof. In some embodiments of this application, the negative electrode current collector is a copper foil.

In some embodiments of this application, the negative electrode active material layer includes negative electrode active material particles, where the negative electrode active material particles may include one or more selected from a group consisting of silicon, a silicon-oxygen compound (SiOₓ, 0 < x ≤ 2), a silicon alloy, a silicon-carbon composite, graphite, mesocarbon microbead (MCMB), hard carbon, soft carbon, a Li-Sn alloy, a Li-Sn-O alloy, Sn, SnO, SnO₂, spinel-structure lithium titanate Li₄Ti₅O₁₂, a Li-Al alloy, and metallic lithium. Selecting a material from the foregoing range helps to improve the energy density of the secondary battery.

In some embodiments of this application, the negative electrode active material layer further includes a binder, where the binder may include one or more selected from a group consisting of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments of this application, the negative electrode active material layer further includes a conductive agent, where the conductive agent may include one or more selected from a group consisting of superconducting carbon, acetylene black, carbon black, Ketjen black, carbon dots, carbon nanotubes, graphene, and carbon nanofibers.

In some embodiments of this application, the negative electrode active material layer may further include another additive, such as a thickener (for example, sodium carboxymethyl cellulose (CMC-Na)).

In addition, a material in the negative electrode plate is not limited to the foregoing materials. Another publicly known material capable of being used as a negative electrode active material, a conductive agent, a binder, and a thickener may also be used.

The negative electrode plate in this application may be manufactured using a conventional method in the art. For example, the negative electrode active material particles, the conductive agent, the binder, and the thickener are dispersed in a solvent, where the solvent may be N-methylpyrrolidone (NMP) or deionized water, to obtain a uniform negative electrode slurry. The negative electrode slurry is applied onto the negative electrode current collector, and then drying and cold pressing are performed to obtain the negative electrode plate.

In some embodiments of this application, the separator may be polyethylene, polypropylene, polyvinylidene fluoride, or a multi-layer composite film thereof.

In some embodiments of this application, the separator is a single-layer separator or a multi-layer separator.

A shape and thickness of the separator are not particularly limited in some embodiments of this application. The manufacturing method of the separator is a publicly known manufacturing method in the art capable of being used for a separator of a secondary battery.

In addition, a secondary battery usually further includes an electrolyte. The electrolyte is a carrier for ion transport and can conduct ions between a positive electrode plate and a negative electrode plate, which guarantees advantages such as good rate performance of the secondary battery.

In this application, an electrolyte is also not particularly limited. An electrolyte known in the art may be used. For example, the electrolyte includes an organic solvent and an electrolytic salt, where the organic solvent may include one or more selected from a group consisting of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfone (MSM), ethyl methyl sulfone (EMS), and diethyl sulfone (ESE).

The electrolytic salt may include one or more selected from a group consisting of lithium hexafluorophosphate (LiPF₆), lithium tetrafluoroborate (LiBF₄), lithium perchlorate (LiClO₄), lithium hexafluoroarsenate (LiAsF₆), lithium bistrifluoromethanesulfonimide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalate phosphate (LiDFOP), and lithium tetrafluoro oxalato phosphate (LiTFOP).

The electrolyte may be manufactured using a conventional method in that art. For example, the organic solvent, the electrolytic salt, and an optional additive can be evenly mixed to obtain the electrolyte. An addition sequence of such materials is not particularly limited.

The positive electrode plate, the separator, and the negative electrode plate are sequentially stacked so that the separator is located between the positive electrode plate and the negative electrode plate. Then the resulting stack is wound to obtain an electrode assembly. The electrode assembly is placed into a housing, and then the electrolyte is injected. Processes such as vacuum packaging, standing, formation, air extraction, and molding are then performed to obtain the secondary battery.

In some embodiments of this application, the housing may include a hard housing or a flexible housing. For example, a material of the hard housing may include metal, and a material of the flexible housing may include a metal plastic film, for example, an aluminum-plastic film and a steel-plastic film.

### Electronic apparatus

A second aspect of this application provides an electronic apparatus, including the secondary battery provided in the first aspect of this application. The secondary battery provided in this application has good rate performance and thermal safety performance, so that the electronic apparatus provided in this application has good rate performance and thermal safety performance.

The electronic apparatus is not particularly limited in some embodiments of this application, and may be any known electronic apparatus used in the prior art. In some embodiments of this application, the electronic apparatus may include, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

Examples below more specifically describe the content disclosed in this application, and these embodiments are merely used for explanatory description. It is apparent for persons skilled in the art to make various modifications and variations within the scope of the content disclosed in this application. Unless otherwise stated, all parts, percentages, and ratio ranges reported in the following examples are based on weight, all reagents used in the examples are commercially available or synthesized in a conventional manner, and can be used directly without further treatment. All instruments used in the examples are commercially available.

For ease of description, in the following examples, the secondary battery is a lithium-ion secondary battery, so as to describe in detail the secondary battery and a manufacturing method thereof.

### Example 1

### Manufacturing of positive electrode plate

Lithium cobaltate, tetra (cyanoethoxymethyl) methane, conductive carbon, and PVDF were dispersed in N-methylpyrrolidone (NMP) at a mass ratio of 96.2:0.3:1.5:2 and the foregoing substances were mixed to obtain a uniform positive electrode slurry.

The positive electrode slurry was applied onto an aluminum foil. Drying, cold pressing, cutting, and slitting were then performed to obtain a positive electrode plate, where the thickness of the positive electrode active material layer was 100 µm.

### Manufacturing of negative electrode plate

Graphite, a conductive agent carbon black, SBR, and a thickener CMC were dispersed in deionized water at a mass ratio of 97:1:1.5:0.5 to obtain a uniform negative electrode slurry.

The negative electrode slurry was applied onto a copper foil. Drying and cold pressing were then performed to obtain a negative electrode plate.

### Manufacturing of separator

The separator was a polyethylene separator.

### Preparation of electrolyte

In a dry argon environment, DMC and EMC were mixed at a mass ratio of 7:3. LiPF₆ with concentration of 1.3 mol/L was then added and the foregoing substances were evenly mixed to obtain an electrolyte.

### Manufacturing of lithium-ion secondary battery

The positive electrode plate, the separator, and the negative electrode plate were sequentially stacked so that the separator was located between the positive electrode plate and the negative electrode plate to provide separation. Then the resulting stack was wound to obtain an electrode assembly. The electrode assembly was placed into a housing, and then the electrolyte prepared above was injected into the housing. Processes such as vacuum packaging, standing, formation, and shaping were then performed to complete the manufacturing of the lithium-ion secondary battery.

### Examples 2 to 11

The manufacturing methods here are similar to the manufacturing method of Example 1 except for the chelated particles of the positive electrode plate, ratio a/b of a quantity of the chelated particles to a quantity of positive electrode active material particles within a region of 5 µm × 5 µm, and/or controlling resistance of the positive electrode plate through percentage of a conductive agent. The quantity of the chelated particles in the region of 5 µm × 5 µm is a, and the quantity of the positive electrode active material particles in the region of 5 µm × 5 µm is b.

### Comparative Example 1

The manufacturing methods here are similar to the manufacturing method of Example 1 except that no chelated particle was added.

### Comparative Examples 2 to 4

The manufacturing methods here are similar to the manufacturing method of Example 1 except for the chelated particles of the positive electrode plate, ratio a/b of a quantity of the chelated particles to a quantity of positive electrode active material particles within a region of 5 µm × 5 µm, and/or controlling resistance of the positive electrode plate through percentage of a conductive agent.

### Examples 12 to 20

The manufacturing methods here are similar to the manufacturing method of Example 1 except for the ratio a/b of a quantity of chelated particles of a positive electrode plate to a quantity of positive electrode active material particles within a region of 5 µm × 5 µm, mass percentage of the chelated particles in a positive electrode active material layer, and thickness H µm of the active material layer. A percentage of a conductive agent, thickness of the chelated particles, and thickness of an electrode plate were adjusted to control resistance of the positive electrode plate to be the same.

### Examples 21 to 26

The manufacturing methods here are similar to the manufacturing method of Example 9 except for the ratio a/b of a quantity of chelated particles of a positive electrode plate to a quantity of positive electrode active material particles within a region of 5 µm × 5 µm, volume-based particle size Dᵥ50 µm of the chelated particles, and resistance R of the positive electrode plate.

### Tests

### (1) Thermal abuse passage time test

A lithium-ion secondary battery to be tested was charged to a full-charge voltage at a constant rate of 0.5C, and then charged at the full-charge voltage until the current reached 0.025C (cut-off current) to make the lithium-ion secondary battery enter a fully charged state. The appearance of the lithium-ion secondary battery before the test was recorded. The battery was placed in an oven at 25°C, the oven was heated to 160°C at a temperature rise velocity of 5°C/min, and then the temperature was kept constant for 60 min. The test stopped after the temperature had dropped to 50°C. 10 lithium-ion secondary batteries were deemed as a group to observe states of the lithium-ion secondary batteries during the test. Combustion and explosion times of the lithium-ion secondary batteries were recorded.

### (2) Capacity retention rate test

In an environment of (25±3)°C, a battery was charged at a current of 0.5C until the voltage reached 4.5 V, then charged at a constant voltage of 4.5 V until the current reached 0.025C, and then fully discharged at currents of 0.2C and 2C, respectively, to obtain discharge capacities at 0.2C and 2C, respectively. A discharge capacity retention rate at 2C/0.2C was obtained by discharge capacity at 2C/discharge capacity at 0.2C.

### (3) Volume-based particle size distribution test of chelated particle

In accordance with the particle size distribution laser diffraction method in GB/T 19077-2016, a laser particle size analyzer (for example, Master Size 3000) might be used for the test to obtain a volume-based particle size of chelated particles. A particle size at the 50th percentile of the cumulative volume distribution is Dᵥ50 µm.

### (4) Resistance R test of positive electrode plate

(1) A secondary battery to be tested was charged to a full-charge voltage at a constant rate of 0.5C, and then charged at the constant full-charge voltage until the current reached 0.025C (cut-off current) to make the secondary battery enter a fully charged state.
(2) The secondary battery was disassembled to obtain a positive electrode plate.
(3) The positive electrode plate was placed in an environment with humidity of 5% to 15%, left standing for 30 min, and then sealed and transferred for the test.
(4) Resistance of the positive electrode plate at 25°C was tested using a BER1200 resistance tester. An interval between adjacent test points was 2 mm to 3 mm, and at least 15 different points were tested. Resistance values of all test points were recorded, and an average value of these test points was obtained through calculation to be as resistance R of the positive electrode plate. Test parameters: area of an indenter: 153.94 mm²; pressure: 3.5 t; and holding time: 50s.
**(5) Mass percentage test of chelated particle in positive electrode active material layer**
   In a dry environment with humidity less than 2% at about 25°C, the positive electrode plate was disassembled from the secondary battery, the positive electrode plate was soaked in an NMP solvent to remove a film, and a film layer was uniformly dispersed in the NMP solvent using a disperser to obtain a slurry with a solid content of 30%. Then, the slurry was poured into a centrifuge for centrifugation to obtain organic particles in the film layer. Finally, the organic particles were dried at 85°C, and the mass percentage was obtained through weighing and calculation.
**(6) Thickness H test of positive electrode active material layer**
   In an environment of about 25°C, the positive electrode plate was disassembled from the secondary battery, and a residual electrolyte on a surface of the positive electrode plate was wiped using dust-free paper. Then, the positive electrode plate was placed under a plasma for cutting to obtain its cross section. The cross section of the positive electrode plate was observed under the SEM, and at least 15 different test points were tested with the overall thickness of the electrode plate being H1 µm, thickness of a current collector being H2 µm, and adjacent test points being spaced apart by 2 mm to 3 mm. Thicknesses of all the test points were recorded, and an average value of H1 minus H2 of these test points was obtained through calculation. The average value was used as the thickness H µm of the positive electrode active material layer.

Table 1 lists the chelated particles of the positive electrode plate, the ratio a/b of the quantity of the chelated particles to the quantity of the positive electrode active material particles within the region of 5 µm × 5 µm in Examples 1 to 11 and Comparative Examples 1 to 4, test results, and the like.

**Table 1**

| No. | Chelated particle | | b | a/b | Conductive agent percentage | Resistance of positive electrode plate R Ω | Thermal abuse passage time (min) | Discharge capacity retention rate at 2C/0.2C |
|---|---|---|---|---|---|---|---|---|
| | Material | a | | | | | | |
| Example 1 | Tetra (cyanoethoxymethyl) methane | 1 | 8 | 0.13 | 1.0% | 1.2 Ω | 18.0 | 96.5% |
| Example 2 | Tetra (4-nitrophenyl) ethylene | 1 | 8 | 0.13 | 1.0% | 1.2 Ω | 13.0 | 96.6% |
| Example 3 | 2-cyano-5-methylpyridine | 2 | 7 | 0.29 | 1.0% | 1.2 Ω | 16.0 | 94.5% |
| Example 4 | Polyacrylonitrile cyano modified organic substance | 1 | 8 | 0.13 | 1.0% | 1.2 Ω | 17.0 | 96.1% |
| Example 5 | Polyacrylic acid cyano modified organic substance | 1 | 10 | 0.10 | 1.0% | 1.2 Ω | 16.5 | 96.2% |
| Example 6 | Tetra (cyanoethoxymethyl) methane | 4 | 10 | 0.40 | 1.0% | 1.2 Ω | 20.0 | 93.6% |
| Example 7 | Tetra (cyanoethoxymethyl) methane | 4 | 8 | 0.50 | 1.0% | 1.2 Ω | 23.0 | 90.8% |
| Example 8 | Tetra (cyanoethoxymethyl) methane | 1 | 5 | 0.20 | 1.5% | 0.5 Ω | 8.0 | 97.9% |
| Example 9 | Tetra (cyanoethoxymethyl) methane | 2 | 11 | 0.18 | 1.4% | 0.8 Ω | 18.5 | 97.5% |
| Example 10 | Tetra (cyanoethoxymethyl) methane | 1 | 5 | 0.20 | 0.8% | 1.5 Ω | 17.0 | 96.3% |
| Example 11 | Tetra (cyanoethoxymethyl) methane | 1 | 5 | 0.20 | 0.5% | 2.0 Ω | 20.0 | 90.5% |
| Comparative Example 1 | *l* | 0 | 10 | 0 | 1.0% | 1.2 Ω | 0.5 | 96.5% |
| Comparative Example 2 | Tetra (cyanoethoxymethyl) methane | 6 | 10 | 0.60 | 1.0% | 1.2 Ω | 27.0 | 82.5% |
| Comparative Example 3 | Tetra (cyanoethoxymethyl) methane | 1 | 5 | 0.20 | 0.4% | 2.2 Ω | 21.0 | 81.2% |
| Comparative Example 4 | Tetra (cyanoethoxymethyl) methane | 1 | 7 | 0.14 | 1.8% | 0.3 Ω | 7.5 | 97.8% |

According to Table 1, it can be learned from the comparison between the test results of Examples 1 to 11 and Comparative Examples 1 to 4 that the resistance of the positive electrode plate is R Q, where R is within the range of 0.5 to 2; and the chelated particles in the positive electrode active material layer include an organic compound containing a cyano group, where the organic compound containing the cyano group can be combined with exposed active sites in the positive electrode active material particles. This can improve structural stability of the positive electrode active material particles, thereby helping to improve rate performance of the secondary battery and reducing the probability of contact between these exposed active sites and the electrolyte. In this way, heat generated by the oxidation and decomposition of the electrolyte can be reduced, which reduces the occurrence of thermal runaway of the secondary battery, thereby improving thermal safety performance of the secondary battery. Moreover, within at least one region of 5 µm × 5 µm of the positive electrode active material layer, when the ratio a/b of the quantity of the chelated particles to the quantity of the positive electrode active material particles is within the foregoing range, the secondary battery can have relatively good rate performance. Therefore, the secondary battery provided in this application can have good thermal safety performance and rate performance.

Table 2 lists the quantities of the chelated particles and positive electrode active material particles within the region of 5 µm × 5 µm in Examples 12 to 19, the mass percentage A% of the chelated particles in the positive electrode active material layer, the thickness H µm of the active material layer, and test results.

**Table 2**

| No. | a/b | A% | Conductive agent percentage | Thickness H of positive electrode active material layer H µm | Resistance of positive electrode plate R Ω | A × H | Thermal abuse passage time (min) | Discharge capacity retention rate at 2C/0.2C |
|---|---|---|---|---|---|---|---|---|
| Example 12 | 0.5 | 0.50% | 0.4% | 50 µm | 1.2 Ω | 25 | 11.5 | 98.1% |
| Example 13 | 0.22 | 0.45% | 0.5% | 60 µm | 1.2 Ω | 27 | 12.0 | 98.0% |
| Example 14 | 0.18 | 0.35% | 0.8% | 80 µm | 1.2 Ω | 28 | 16.0 | 97.3% |
| Example 15 | 0.13 | 0.30% | 1.0% | 100 µm | 1.2 Ω | 30 | 18.0 | 96.5% |
| Example 16 | 0.14 | 0.25% | 1.2% | 130 µm | 1.2 Ω | 32.5 | 17.5 | 96.5% |
| Example 17 | 0.13 | 0.20% | 1.4% | 150 µm | 1.2 Ω | 30 | 15.0 | 95.9% |
| Example 18 | 0.10 | 0.15% | 1.7% | 170 µm | 1.2 Ω | 25.5 | 16.0 | 95.4% |
| Example 19 | 0.09 | 0.05% | 2.0% | 200 µm | 1.2 Ω | 10 | 15.5 | 95.6% |
| Example 20 | 0.08 | 0.08% | 1.0% | 100 µm | 1.2 Ω | 8 | 10 | 96.8% |

According to Table 2, it can be learned from comparison between the test results of Examples 12 to 20 that in a case that the resistance of the positive electrode plates is the same, the rate performance is relatively good, and the mass percentage A% of the chelated particles in the positive electrode active material layer and the thickness H µm of the positive electrode active material layer satisfy A × H ≥ 10, which can further help to make the secondary battery have a relatively high capacity retention rate and make the secondary battery have good thermal safety performance.

Table 3 lists the quantities of the chelated particles and positive electrode active material particles within the region of 5 µm × 5 µm in Examples 21 to 26, the volume-based particle size Dᵥ50 µm of the chelated particles, the resistance R of the positive electrode plate, and test results.

**Table 3**

| No. | a/b | Dᵥ50 µm | Mass percentage of conductive agent | Resistance of positive electrode plate RQ | Dᵥ50/R | Thermal abuse passage time (min) | Discharge capacity retention rate at 2C/0.2C |
|---|---|---|---|---|---|---|---|
| Example 21 | 0.111 | 0.5 µm | 1.5% | 0.5 Ω | 1.0 | 17.0 | 97.1% |
| Example 9 | 0.182 | 1.0 µm | 1.4% | 0.8 Ω | 1.3 | 18.5 | 97.5% |
| Example 22 | 0.083 | 2.0 µm | 1.2% | 1.0 Ω | 2.0 | 18.0 | 96.9% |
| Example 23 | 0.125 | 2.5 µm | 1.0% | 1.2 Ω | 2.1 | 18.0 | 96.5% |
| Example 24 | 0.111 | 3.0 µm | 0.7% | 1.6 Ω | 1.9 | 16.0 | 96.4% |
| Example 25 | 0.10 | 4.0 µm | 0.5% | 1.7 Ω | 2.4 | 15.5 | 95.7% |
| Example 26 | 0.08 | 5.0 µm | 0.4% | 1.9 Ω | 2.6 | 10.5 | 95.3% |

According to Table 3, it can be learned from comparison between the test results of Examples 21 to 26 that when the volume-based particle size of the chelated particles is Dᵥ50 µm, the resistance of the positive electrode plate is R Q, and Dᵥ50 and R satisfy Dᵥ50/R ≤ 2.5, the secondary battery can have a relatively high capacity retention rate, and the thermal safety performance of the secondary battery can be further improved.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in some embodiments or make equivalent replacements to some or all technical features thereof without departing from the scope of the technical solutions of some embodiments of this application. All such modifications and equivalent replacements shall fall within the scope of claims and specification of this application. In particular, as long as there is no structural conflict, the various technical features mentioned in some embodiments can be combined in any manner. This application is not limited to the specific embodiments disclosed in this specification but includes all technical solutions falling within the scope of the claims.

## Claims

1. A secondary battery, comprising a positive electrode plate, wherein a resistance of the positive electrode plate is R Q, R ranges from 0.5 to 2; and the positive electrode plate comprises a positive electrode current collector and a positive electrode active material layer, wherein the positive electrode active material layer is arranged on at least one surface of the positive electrode current collector;
the positive electrode active material layer comprises positive electrode active material particles and chelated particles, the chelated particles comprising an organic compound containing a cyano group; and
within at least one region of 5 µm × 5 µm of the positive electrode active material layer, a ratio of a quantity of the chelated particles to a quantity of the positive electrode active material particles ranges from 0.01 to 0.5.

2. The secondary battery according to claim 1, wherein within at least one region of 5 µm × 5 µm of the positive electrode active material layer, a ratio of a quantity of the chelated particles to a quantity of the positive electrode active material particles ranges from 0.1 to 0.3, and R ranges from 0.8 to 1.5.

3. The secondary battery according to any one of claims 1 to 2, wherein a mass percentage of the chelated particles in the positive electrode active material layer is A%, and a thickness of the positive electrode active material layer is H µm, wherein A × H ≥ 10.

4. The secondary battery according to claim 3, wherein A% ranges from 0.05% to 0.5%.

5. The secondary battery according to any one of claims 1 to 4, wherein Dᵥ50 µm is ≤ 4, Dᵥ50 µm is a particle diameter reaching a volume accumulation of 50% from the small particle diameter side in the volume-based particle size distribution of the chelated particles.

6. The secondary battery according to claim 5, wherein Dᵥ50/R ≤ 2.5.

7. The secondary battery according to any one of claims 3 to 6, wherein H ranges from 50 to 200.

8. The secondary battery according to any one of claims 1 to 7, wherein the chelated particles comprise one or more selected from the group consisting of polyacrylonitrile, modified polyacrylonitrile, tetra (cyanoethoxymethyl) methane, tetra (4-nitrophenyl) ethylene, and 2-cyano-5-methylpyridine.

9. The secondary battery according to any one of claims 1 to 8, wherein the chelated particles further comprise polyacrylic acid and modified polyacrylic acid.

10. The secondary battery according to any one of claims 2 to 9, wherein R ranges from 0.8 to 1.2.

11. The secondary battery according to any one of claims 3 to 10, wherein 10≤A × H ≤ 32.5, and H ranges from 80 to 200.

12. The secondary battery according to any one of claims 5 to 11, wherein 1.0≤ Dᵥ50/R ≤ 2.1.

13. An electronic apparatus, comprising the secondary battery according to any one of claims 1 to 12.
